(19)
Europäisches
Patentamt

European
Patent Office

Office européen
des brevets

(11)  **EP 4 358 335 A1**

(12)  # EUROPEAN PATENT APPLICATION
published in accordance with Art. 153(4) EPC

(43) Date of publication:
**24.04.2024   Bulletin 2024/17**

(21) Application number: **21945770.2**

(22) Date of filing: **19.11.2021**

(51) International Patent Classification (IPC):
*H02J 3/00* (2006.01)     *H02M 7/5387* (2007.01)

(52) Cooperative Patent Classification (CPC):
Y02E 60/60

(86) International application number:
**PCT/CN2021/131696**

(87) International publication number:
**WO 2022/262191 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **16.06.2021   CN 202110664961**

(71) Applicant: **Electric Power Research Institute.
China Southern Power Grid
Guangzhou, Guangdong 510663 (CN)**

(72) Inventors:
• **XU, Shukai
  Guangzhou, Guangdong 510663 (CN)**

• **ZHOU, Yuebin
  Guangzhou, Guangdong 510663 (CN)**
• **CAO, Wanyu
  Guangzhou, Guangdong 510663 (CN)**
• **YANG, Liu
  Guangzhou, Guangdong 510663 (CN)**
• **WU, Yue
  Guangzhou, Guangdong 510663 (CN)**

(74) Representative: **von Hirschhausen, Helge
Grosse - Schumacher -
Knauer - von Hirschhausen
Patent- und Rechtsanwälte
Nymphenburger Straße 14
80335 München (DE)**

(54)  **DC FAULT CLEARING CONTROL METHOD AND DEVICE FOR HYBRID MMC, AND STORAGE MEDIUM**

(57)    Disclosed in the present invention is a DC fault clearing control method for a hybrid MMC, comprising: generating an inner-loop control DC internal potential reference value by means of a DC output current control link; generating a d-axis reference current by means of a sub-module capacitor voltage control link; generating a q-axis reference current by means of a reactive power control link; inputting the DC internal potential reference value, the d-axis reference current, the q-axis reference current, a dq-axis power grid voltage value converted according to a collected three-phase power grid voltage, and a dq-axis output current value into an inner-loop control link; and using an obtained three-phase upper bridge arm voltage reference value and an obtained three-phase lower bridge arm voltage reference value as input of a pulse modulation controller of the hybrid MMC, such that a pulse control signal of the hybrid MMC is generated. Further disclosed in the present invention are a DC fault clearing control device for a hybrid MMC and a storage medium, such that a system can suppress the overvoltage of a sub-module capacitor while quickly clearing a DC fault, the DC fault current clearing performance of the hybrid MMC is improved, and the loss rate of a device is reduced.

EP 4 358 335 A1

Input a direct-current output current of the hybrid MMC to a control loop for a direct-current fault current to obtain a reference value of the direct-current inner potential

S11

Input an average voltage of sub-module capacitors in the hybrid MMC to an outer control loop for voltages of the sub-module capacitors to obtain a d-axis reference current

S12

Input a reactive power outputted by the hybrid MMC to an outer control loop for the reactive power to obtain a q-axis reference current

S13

Obtain dq-axis grid voltages based on a three-phase grid voltage at an alternating-current terminal of the hybrid MMC, and obtain dq-axis output currents based on a three-phase output current at the alternating-current terminal of the hybrid MMC

S14

Input the reference value of the direct-current inner potential, the d-axis reference current, the q-axis reference current, the dq-axis grid voltages and the dq-axis output currents to an inner control loop to obtain reference voltages of a three-phase upper bridge arm and reference voltages of a three-phase lower bridge arm of the hybrid MMC

S15

Input the reference voltages of the three-phase upper bridge arm and the reference voltages of the three-phase lower bridge arm to a pulse modulation controller for the hybrid MMC to generate a pulse control signal for the hybrid MMC

S16

**Figure 1**

## Description

### FIELD

The present disclosure relates to the technical field of direct-current power transmission, and in particular to a method and an apparatus for controlling a hybrid MMC, and a storage medium.

### BACKGROUND

With the continuous improvement of a capacity and a voltage level of a modular multilevel converter (MMC), the MMC is widely applied in the field of high-voltage direct-current transmission with a large capacity over a long distance.

In a direct-current transmission system with a large capacity over a long distance, a fault is mostly cleared by blocking a converter according to the conventional research on direct-current fault clearance based on a hybrid MMC. After the hybrid MMC is blocked, full-bridge sub-module capacitors are connected in series with a circuit through which fault current flows and the fault current is blocked by inverse voltages of the full-bridge sub-module capacitors. However, in a case that a direct-current transmission line over a long distance stores a large amount of energy, the fault clearance by blocking the converter may cause a significant increase in voltages of the full-bridge sub-module capacitors in the hybrid MMC, and an overvoltage of full-bridge sub-modules easily results in damage to devices.

### SUMMARY

A method and an apparatus for controlling a hybrid MMC, and a storage medium are provided according to embodiments of the present disclosure. With the introduction of inner-loop control variables for a direct-current inner potential, outer-loop control on a reactive power and outer-loop control on voltages of sub-module capacitors, the direct-current fault in the system can be rapidly cleared, the overvoltage of the sub-module capacitors can be effectively avoided, and a dynamic reactive power support can be provided for an alternating-current power grid, to improve the performance of the hybrid MMC in clearing the direct-current fault and the direct-current fault ride-through capability of the hybrid MMC, and reduce a loss rate of devices.

In order to achieve the above objectives, a method for controlling a hybrid MMC is provided according to an embodiment of the present disclosure. The method includes: inputting a direct-current output current of the hybrid MMC to a control loop for a direct-current fault current to obtain a reference value of a direct-current inner potential; inputting an average voltage of sub-module capacitors in the hybrid MMC to an outer control loop for voltages of the sub-module capacitors to obtain a d-axis reference current; inputting a reactive power outputted by the hybrid MMC to an outer control loop for the reactive power to obtain a q-axis reference current; obtaining dq-axis grid voltages based on a three-phase grid voltage at an alternating-current terminal of the hybrid MMC, and obtaining dq-axis output currents based on a three-phase output current at the alternating-current terminal of the hybrid MMC; inputting the reference value of the direct-current inner potential, the d-axis reference current, the q-axis reference current, the dq-axis grid voltages and the dq-axis output currents to an inner control loop to obtain reference voltages of a three-phase upper bridge arm and reference voltages of a three-phase lower bridge arm of the hybrid MMC; and inputting the reference voltages of the three-phase upper bridge arm and the reference voltages of the three-phase lower bridge arm to a pulse modulation controller for the hybrid MMC to generate a pulse control signal for the hybrid MMC.

In an embodiment, the inputting a direct-current output current of the hybrid MMC to a control loop for a direct-current fault current to obtain a reference value of a direct-current inner potential includes: calculating a lower limit of a direct-current voltage of the hybrid MMC based on a preset direct-current rated voltage of the hybrid MMC and a full-bridge sub-module proportional coefficient of the hybrid MMC; calculating a deviation signal of the direct-current output current based on the direct-current output current of the hybrid MMC and a preset reference value of the direct-current output current of the hybrid MMC; and calculating the reference value of the direct-current inner potential based on a preset proportional control coefficient, the deviation signal of the direct-current output current, the direct-current rated voltage and the lower limit of the direct-current voltage.

In an embodiment, the calculating the reference value of the direct-current inner potential based on a preset proportional control coefficient, the deviation signal of the direct-current output current, the direct-current rated voltage and the lower limit of the direct-current voltage includes: multiplying the preset proportional control coefficient by the deviation signal of the direct-current output current to obtain a signal value; determining the direct-current rated voltage as the reference value of the direct-current inner potential in a case that the signal value is greater than or equal to the direct-current rated voltage; determining the lower limit of the direct-current voltage as the reference value of the direct-current inner potential in a case that the signal value is less than or equal to the lower limit of the direct-current voltage; and determining the signal value as the reference value of the direct-current inner potential in a case that the signal value is greater than the lower limit of the direct-current voltage and less than the direct-current rated voltage.

In an embodiment, the inputting an average voltage of sub-module capacitors in the hybrid MMC to an outer control loop for voltages of the sub-module capacitors to obtain a d-axis reference current includes: calculating a voltage deviation signal of the sub-module capacitors based on the average voltage of the sub-module capacitors in the hybrid MMC and a preset reference voltage of the sub-module capacitors in the hybrid MMC; and inputting the voltage deviation signal of the sub-module capacitors to a first proportional-integral controller to obtain the d-axis reference current.

In an embodiment, the inputting a reactive power outputted by the hybrid MMC to an outer control loop for the reactive power to obtain a q-axis reference current includes: calculating a deviation signal of the reactive power based on the reactive power outputted by the hybrid MMC and a preset reference value of the reactive power of the hybrid MMC; and inputting the deviation signal of the reactive power to a second proportional-integral controller to obtain the q-axis reference current.

In an embodiment, the obtaining dq-axis grid voltages based on a three-phase grid voltage at an alternating-current terminal of the hybrid MMC, and obtaining dq-axis output currents based on a three-phase output current at the alternating-current terminal of the hybrid MMC includes: performing coordinate transformation on the three-phase grid voltage at the alternating-current terminal of the hybrid MMC in a stationary coordinate system, to obtain a d-axis grid voltage and a q-axis grid voltage in a synchronous rotating coordinate system; and performing coordinate transformation on the three-phase output current at the alternating-current terminal of the hybrid MMC in the stationary coordinate system, to obtain a d-axis output current and a q-axis output current in the synchronous rotating coordinate system.

In an embodiment, the inputting the reference value of the direct-current inner potential, the d-axis reference current, the q-axis reference current, the dq-axis grid voltages and the dq-axis output currents to an inner control loop to obtain reference voltages of a three-phase upper bridge arm and reference voltages of a three-phase lower bridge arm of the hybrid MMC includes: calculating a d-axis current deviation signal based on a d-axis output current and the d-axis reference current; inputting the d-axis current deviation signal to a third proportional-integral controller to obtain a first intermediate control variable; calculating a q-axis current deviation signal based on a q-axis output current and the q-axis reference current; inputting the q-axis current deviation signal to a fourth proportional-integral controller to obtain a second intermediate control variable; calculating a d-axis reference voltage based on a preset synchronous angular frequency of a three-phase alternating-current power grid, preset bridge arm reactance of the hybrid MMC, the first intermediate control variable, the q-axis output current and a d-axis grid voltage; calculating a q-axis reference voltage based on the synchronous angular frequency, the bridge arm reactance, the second intermediate control variable, the d-axis output current and the q-axis grid voltage; performing coordinate transformation on the d-axis reference voltage and the q-axis reference voltage to obtain three-phase reference voltages at the alternating-current terminal of the hybrid MMC in the stationary coordinate system; and obtaining the reference voltages of the three-phase upper bridge arm and the reference voltages of the three-phase lower bridge arm of the hybrid MMC based on the three-phase reference voltages and the reference value of the direct-current inner potential, where the dq-axis grid voltages include the d-axis grid voltage and the q-axis grid voltage, and the dq-axis output currents include the d-axis output current and the q-axis output current.

In an embodiment, the obtaining the reference voltages of the three-phase upper bridge arm and the reference voltages of the three-phase lower bridge arm of the hybrid MMC based on the three-phase reference voltages and the reference value of the direct-current inner potential includes: subtracting the three-phase reference voltages from a half of the reference value of the direct-current inner potential, respectively, to obtain the reference voltages of the three-phase upper bridge arm of the hybrid MMC; and adding the three-phase reference voltages to the half of the reference value of the direct-current inner potential, respectively, to obtain the reference voltages of the three-phase lower bridge arm of the hybrid MMC.

In order to achieve the above objectives, an apparatus for controlling a hybrid MMC is further provided according to an embodiment of the present disclosure. The apparatus includes a module for controlling a direct-current fault current, an outer-loop module for controlling voltages of sub-module capacitors, an outer-loop module for controlling a reactive power, a coordinate transformation module, an inner-loop control module, and a control signal generation module. The module for controlling a direct-current fault current is configured to input a direct-current output current of the hybrid MMC to a control loop for a direct-current fault current to obtain a reference value of the direct-current inner potential. The outer-loop module for controlling voltages of sub-module capacitors is configured to input an average voltage of sub-module capacitors in the hybrid MMC to an outer control loop for the voltages of the sub-module capacitors to obtain a d-axis reference current. The outer-loop module for controlling a reactive power is configured to input a reactive power outputted by the hybrid MMC to an outer control loop for the reactive power to obtain a q-axis reference current. The coordinate transformation module is configured to obtain dq-axis grid voltages based on a three-phase grid voltage at an alternating-current terminal of the hybrid MMC, and obtain dq-axis output currents based on a three-phase output current at the alternating-current terminal of the hybrid MMC. The inner-loop control module is configured to input the reference value of the direct-current inner potential, the d-axis reference current, the q-axis reference current, the dq-axis grid voltages and the dq-axis output currents to an inner control loop to obtain reference voltages of a three-phase upper bridge arm and reference voltages of a three-phase lower bridge arm of the hybrid MMC. The control signal generation module is configured to input the reference voltages of the three-phase upper bridge arm and the reference voltages of the three-phase lower bridge arm to a pulse modulation controller for the hybrid MMC to generate a pulse control signal of the hybrid MMC.

In order to achieve the above objectives, a storage medium storing a computer program is further provided according to an embodiment of the present disclosure. The computer program, when running, controls a device where the storage medium is located to perform the method for controlling a hybrid MMC according to any one of the embodiments described above.

Compared with the conventional technology, with the method for controlling a hybrid MMC according to the embodiments of the present disclosure, the reference value of the direct-current inner potential is obtained based on the direct-current output current of the hybrid MMC through the control loop for the direct-current fault current, the d-axis reference current is obtained based on the average voltage of the sub-module capacitors in the hybrid MMC through the outer control loop for the voltages of the sub-module capacitors, the q-axis reference current is obtained based on the reactive power outputted by the hybrid MMC through the outer control loop for the reactive power, the dq-axis grid voltages and the dq-axis output currents are obtained based on the three-phase grid voltage and the three-phase output current at the alternating-current terminal of the hybrid MMC through coordinate transformation, the reference voltages of the three-phase upper bridge arm and the reference voltages of the three-phase lower bridge arm of the hybrid MMC are obtained through the inner control loop, based on the reference value of the direct-current inner potential, the d-axis reference current, the q-axis reference current, the dq-axis grid voltages and the dq-axis output currents, and the reference voltages of the three-phase upper bridge arm and the reference voltages of the three-phase lower bridge arm are inputted to the pulse modulation controller for the hybrid MMC to generate the pulse control signal for the hybrid MMC. In the embodiments of the present disclosure, with the introduction of inner-loop control variables for the direct-current inner potential, the outer-loop control on the reactive power and the outer-loop control on the voltages of the sub-module capacitors, the direct-current fault in the system can be rapidly cleared, the overvoltage of the sub-module capacitors can be effectively avoided, and a dynamic reactive power support can be provided for the alternating-current power grid, improving the performance of the hybrid MMC in clearing the direct-current fault and the direct-current fault ride-through capability of the hybrid MMC, thereby reducing a loss rate of devices.

## BRIEF DESCRIPTION OF THE DRAWINGS

Figure 1 is a schematic flowchart of a method for controlling a hybrid MMC according to an embodiment of the present disclosure;

Figure 2 is a schematic structural diagram of a hybrid MMC according to an embodiment of the present disclosure;

Figure 3 is a diagram showing a curve of a lower limit to which a direct-current voltage of a hybrid MMC is adjustable changes with a full-bridge sub-module proportional coefficient according to an embodiment of the present disclosure;

Figure 4 is a diagram showing an equivalent circuit during a process of clearing a direct-current fault by a hybrid MMC according to an embodiment of the present disclosure;

Figure 5 is a diagram showing waveforms of a direct-current voltage and a direct-current during a process of clearing a direct-current fault by a hybrid MMC according to an embodiment of the present disclosure;

Figure 6 is a schematic structural diagram of a controller for clearing a direct-current fault in a hybrid MMC according to an embodiment of the present disclosure;

Figure 7 is a diagram showing waveforms of voltages and currents during a process of clearing a direct-current fault by a hybrid MMC according to an embodiment of the present disclosure;

Figure 8 is a schematic structural diagram of an apparatus for controlling a hybrid MMC according to an embodiment of the present disclosure; and

Figure 9 is a schematic structural diagram of a device for controlling a hybrid MMC according to an embodiment of the present disclosure.

**DETAILED DESCRIPTION OF EMBODIMENTS**

Technical solutions of embodiments of the present disclosure are clearly and completely described below in conjunction with the drawings of the embodiments of the present disclosure. Apparently, the embodiments described below are only some embodiments of the present disclosure, rather than all the embodiments. Any other embodiments obtained by those skilled in the art based on the embodiments in the present disclosure without any creative effort fall within the protection scope of the present disclosure.

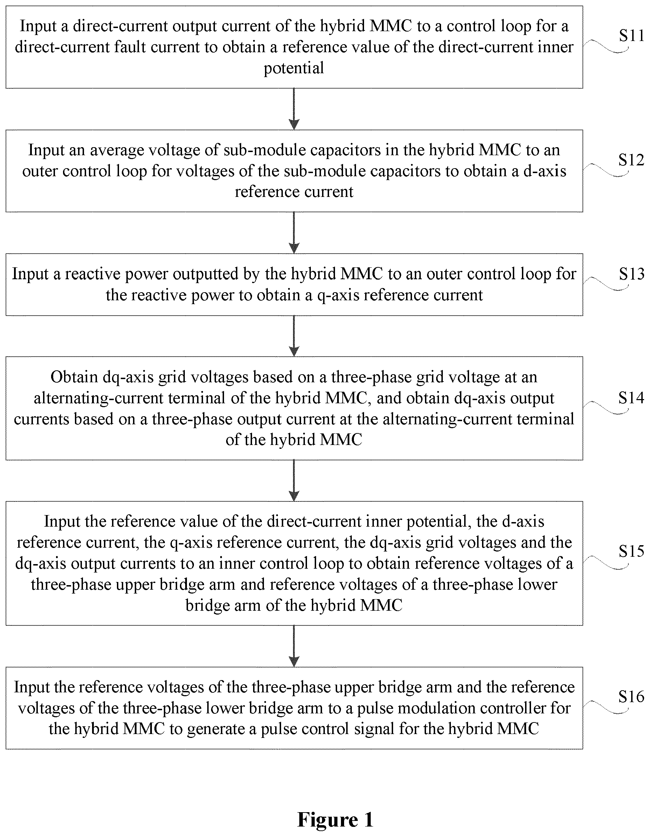

Reference is made to Figure 1, which is a schematic flowchart of a method for controlling a hybrid MMC according to an embodiment of the present disclosure. The method for controlling a hybrid MMC includes the following steps S11 to S16.

In step S11, a direct-current output current of the hybrid MMC is inputted to a control loop for a direct-current fault current to obtain a reference value of a direct-current inner potential.

In step S12, an average voltage of sub-module capacitors in the hybrid MMC is inputted to an outer control loop for voltages of the sub-module capacitors to obtain a d-axis reference current.

In step S13, a reactive power outputted by the hybrid MMC is inputted to an outer control loop for the reactive power to obtain a q-axis reference current.

In step S14, dq-axis grid voltages are obtained based on a three-phase grid voltage at an alternating-current terminal of the hybrid MMC, and dq-axis output currents are obtained based on a three-phase output current at the alternating-current terminal of the hybrid MMC.

In step S15, the reference value of the direct-current inner potential, the d-axis reference current, the q-axis reference current, the dq-axis grid voltages and the dq-axis output currents are inputted to an inner control loop to obtain reference voltages of a three-phase upper bridge arm and reference voltages of a three-phase lower bridge arm of the hybrid MMC.

In step S16, the reference voltages of the three-phase upper bridge arm and the reference voltages of the three-phase lower bridge arm are inputted to a pulse modulation controller for the hybrid MMC to generate a pulse control signal for the hybrid MMC.

In step S12, the average voltage of the sub-module capacitors in the hybrid MMC is calculated from the acquired voltages of all the sub-module capacitors in the hybrid MMC.

Compared with the conventional technology, with the method for controlling a hybrid MMC according to the embodiment of the present disclosure, the reference value of the direct-current inner potential is obtained based on the direct-current output current of the hybrid MMC through the control loop for the direct-current fault current, the d-axis reference current is obtained based on the average voltage of the sub-module capacitors in the hybrid MMC through the outer control loop for the voltages of the sub-module capacitors, the q-axis reference current is obtained based on the reactive power outputted by the hybrid MMC through the outer control loop for the reactive power, the dq-axis grid voltages and the dq-axis output currents are obtained based on the three-phase grid voltage and the three-phase output current at the alternating-current terminal of the hybrid MMC through coordinate transformation, the reference voltages of the three-phase upper bridge arm and the reference voltages of the three-phase lower bridge arm of the hybrid MMC are obtained through the inner control loop, based on the reference value of the direct-current inner potential, the d-axis reference current, the q-axis reference current, the dq-axis grid voltages and the dq-axis output currents, and the reference voltages of the three-phase upper bridge arm and the reference voltages of the three-phase lower bridge arm are inputted to the pulse modulation controller for the hybrid MMC to generate the pulse control signal for the hybrid MMC. In the embodiment of the present disclosure, with the introduction of inner-loop control variables for the direct-current inner potential, the outer-loop control on the reactive power and the outer-loop control on the voltages of the sub-module capacitors, the direct-current fault in the system can be rapidly cleared, the overvoltage of the sub-module capacitors can be effectively avoided, and a dynamic reactive power support can be provided for an alternating-current power grid, improving the performance of the hybrid MMC in clearing the direct-current fault and the direct-current fault ride-through capability of the hybrid MMC, thereby reducing a loss rate of devices.

In an embodiment, based on steps S11 to S16, the inputting the direct-current output current of the hybrid MMC to the control loop for the direct-current fault current to obtain the reference value of the direct-current inner potential in step S11 includes the following steps S111 to S113.

In step S111, a lower limit of a direct-current voltage of the hybrid MMC is calculated based on a preset direct-current rated voltage of the hybrid MMC and a full-bridge sub-module proportional coefficient of the hybrid MMC.

In step S112, a deviation signal of the direct-current output current is calculated based on the direct-current output current of the hybrid MMC and a preset reference value of the direct-current output current of the hybrid MMC.

In step S113, the reference value of the direct-current inner potential is calculated based on a preset proportional control coefficient, the deviation signal of the direct-current output current, the direct-current rated voltage and the lower limit of the direct-current voltage.

For example, the reference value of the direct-current output current of the hybrid MMC (i.e., the hybrid modular multilevel converter) is preset to 0, and the direct-current output current $i_{dc}$ of the hybrid modular multilevel converter is acquired. In this case, the deviation signal of the direct-current output current is calculated from $\Delta i_{dc} = -i_{dc}$. The reference value $e_{dc\_ref}$ of the direct-current inner potential is calculated based on the preset proportional control coefficient $k_p$, the deviation signal $\Delta i_{dc}$ of the direct-current output current, the direct-current rated voltage $U_{dcN}$ and the lower limit $U_{neg\_lim}$ of the direct-current voltage.

Further, the calculating the reference value of the direct-current inner potential based on the preset proportional control coefficient, the deviation signal of the direct-current output current, the direct-current rated voltage and the lower limit of the direct-current voltage in step S113 includes the following steps S1131 to S1134.

In step S1131, the preset proportional control coefficient is multiplied by the deviation signal of the direct-current output current to obtain a signal value.

In step S1132, the direct-current rated voltage is determined as the reference value of the direct-current inner potential in a case that the signal value is greater than or equal to the direct-current rated voltage.

In step S1133, the lower limit of the direct-current voltage is determined as the reference value of the direct-current inner potential in a case that the signal value is less than or equal to the lower limit of the direct-current voltage.

In step S1134, the signal value is determined as the reference value of the direct-current inner potential in a case that the signal value is greater than the lower limit of the direct-current voltage and less than the direct-current rated voltage.

For example, the proportional control coefficient is set to $k_p$, the deviation signal of the direct-current output current is set to $\Delta i_{dc}$, the direct-current rated voltage is set to $U_{dcN}$, and the lower limit of the direct-current voltage is set to $U_{neg\_lim}$. The preset proportional control coefficient $k_p$ is multiplied by the deviation signal $\Delta i_{dc}$ of the direct-current output current to obtain the signal value $k_p \Delta i_{dc}$. In a case that $k_p \Delta i_{dc} \geq U_{dcN}$, $e_{dc\_ref} = U_{dcN}$. In a case that $k_p \Delta i_{dc} \leq U_{neg\_lim}$, $e_{dc\_ref} = U_{neg\_lim}$. In a case that $U_{neg\_lim} < k_p \Delta i_{dc} < U_{dcN}$, $e_{dc\_ref} = k_p \Delta i_{dc}$.

The inputting the average voltage of the sub-module capacitors in the hybrid MMC to the outer control loop for the voltages of the sub-module capacitors to obtain the d-axis reference current in step S12 includes the following steps S121 and S122.

In step S121, a voltage deviation signal of the sub-module capacitors is calculated based on the average voltage of the sub-module capacitors in the hybrid MMC and a preset reference voltage of the sub-module capacitors in the hybrid MMC.

In step S122, the voltage deviation signal of the sub-module capacitors is inputted to a first proportional-integral controller to obtain the d-axis reference current.

For example, the voltage deviation signal of the sub-module capacitors is calculated based on the preset reference voltage $U_{cap\_ref}$ of the sub-module capacitors in the hybrid modular multilevel converter and the acquired average voltage $U_{cap}$ of the sub-module capacitors in the hybrid modular multilevel converter according to an equation $\Delta U_{cap} = U_{cap\_ref} - U_{cap}$. The voltage deviation signal $\Delta U_{cap}$ of the sub-module capacitors is inputted to the first proportional-integral controller to obtain the d-axis reference current $i_{d\_ref}$ in a synchronous rotating coordinate system.

The inputting the reactive power outputted by the hybrid MMC to the outer control loop for the reactive power to obtain the q-axis reference current in step S13 includes the following steps S131 and S132.

In step S131, a deviation signal of the reactive power is calculated based on the reactive power outputted by the hybrid MMC and a preset reference value of the reactive power of the hybrid MMC.

In step S132, the deviation signal of the reactive power is inputted to a second proportional-integral controller to obtain the q-axis reference current.

For example, the deviation signal of the reactive power is calculated based on the preset reference value $Q_{ref}$ of the reactive power of the hybrid modular multilevel converter and the acquired reactive power $Q$ outputted by the hybrid modular multilevel converter according to an equation $\Delta Q = Q_{ref} - Q$. The deviation signal $\Delta Q$ of the reactive power is inputted to the second proportional-integral controller to obtain the q-axis reference current in the synchronous rotating coordinate system.

The obtaining the dq-axis grid voltages based on the three-phase grid voltage at the alternating-current terminal of the hybrid MMC, and obtaining the dq-axis output currents based on the three-phase output current at the alternating-current terminal of the hybrid MMC in step S14 includes the following steps S141 and S142.

In step S141, coordinate transformation is performed on the three-phase grid voltage at the alternating-current terminal of the hybrid MMC in a stationary coordinate system, to obtain a d-axis grid voltage and a q-axis grid voltage in the synchronous rotating coordinate system.

In step S142, coordinate transformation is performed on the three-phase output current at the alternating-current terminal of the hybrid MMC in the stationary coordinate system, to obtain a d-axis output current and a q-axis output current in the synchronous rotating coordinate system.

For example, the three-phase grid voltage at the alternating-current terminal of the hybrid modular multilevel converter in the three-phase stationary coordinate system is acquired, and the three-phase grid voltage in the three-phase stationary coordinate system is transformed into the d-axis grid voltage $u_{sd}$ and the q-axis grid voltage $u_{sq}$ in the synchronous rotating coordinate system through coordinate transformation. The three-phase output current at the alternating-current terminal of the hybrid modular multilevel converter in the three-phase stationary coordinate system is acquired, and the three-phase output current in the three-phase stationary coordinate system is transformed into the d-axis output current $i_d$ and q-axis output current $i_q$ in the synchronous rotating coordinate system through coordinate transformation.

The inputting the reference value of the direct-current inner potential, the d-axis reference current, the q-axis reference current, the dq-axis grid voltages and the dq-axis output currents to the inner control loop to obtain the reference voltages of the three-phase upper bridge arm and the reference voltages of the three-phase lower bridge arm of the hybrid MMC in step S15 includes the following steps S151 to S158.

In step S151, a d-axis current deviation signal is calculated based on the d-axis output current and the d-axis reference current.

In step S152, the d-axis current deviation signal is inputted to a third proportional-integral controller to obtain a first intermediate control variable.

In step S153, a q-axis current deviation signal is calculated based on the q-axis output current and the q-axis reference current.

In step S154, the q-axis current deviation signal is inputted to a fourth proportional-integral controller to obtain a second intermediate control variable.

In step S155, a d-axis reference voltage is calculated based on a preset synchronous angular frequency of a three-phase alternating-current power grid, preset bridge arm reactance of the hybrid MMC, the first intermediate control variable, the q-axis output current and the d-axis grid voltage.

In step S156, a q-axis reference voltage is calculated based on the synchronous angular frequency, the bridge arm reactance, the second intermediate control variable, the d-axis output current and the q-axis grid voltage.

In step S157, coordinate transformation is performed on the d-axis reference voltage and the q-axis reference voltage to obtain three-phase reference voltages at the alternating-current terminal of the hybrid MMC in the stationary coordinate system.

In step S158, the reference voltages of the three-phase upper bridge arm and the reference voltages of the three-phase lower bridge arm of the hybrid MMC are obtained based on the three-phase reference voltages and the reference value of the direct-current inner potential. The dq-axis grid voltages include the d-axis grid voltage and the q-axis grid voltage, and the dq-axis output currents include the d-axis output current and the q-axis output current.

For example, the d-axis current deviation signal $\Delta i_d$ is calculated based on the d-axis output current $i_d$ in the synchronous rotating coordinate system and the d-axis reference current $i_{d\_ref}$ in the synchronous rotating coordinate system according to an equation $\Delta i_d = i_{d\_ref} - i_d$. The d-axis current deviation signal $\Delta i_d$ is inputted to the third proportional-integral controller to obtain the first intermediate control variable $v_1$. The q-axis current deviation signal $\Delta i_q$ is calculated based on the q-axis output current $i_q$ in the synchronous rotating coordinate system and the q-axis reference current $i_{q\_ref}$ in the synchronous rotating coordinate system in step (6) according to an equation $\Delta i_q = i_{q\_ref} - i_q$. The q-axis current deviation signal $\Delta i_q$ is inputted to the fourth proportional-integral controller to obtain the second intermediate control variable $v_2$. The synchronous angular frequency of the three-phase alternating-current power grid is preset to $\omega$, and the bridge arm reactance of the hybrid modular multilevel converter is preset to $L$. The d-axis reference voltage $u_{d\_ref}$ in the synchronous rotating coordinate system is calculated based on the first intermediate control variable $v_1$, the q-

axis output current $i_q$, and the d-axis grid voltage $u_{sd}$ according to an equation $$u_{d\_ref} = -v_1 + \frac{1}{2}\omega L i_q + u_{sd}$$ . The q-axis reference voltage $u_{q\_ref}$ in the synchronous rotating coordinate system is calculated based on the synchronous angular frequency $\omega$, the bridge arm reactance $L$ of the hybrid modular multilevel converter, the second intermediate control variable $v_2$, the d-axis output current $i_d$ and the q-axis grid voltage $u_{sq}$ according to an equation

$$u_{q\_ref} = -v_2 - \frac{1}{2}\omega L i_d + u_{s\_q}$$ . Coordinate transformation is performed on the d-axis reference voltage $u_{d\_ref}$ and the q-axis reference voltage $u_{q\_ref}$ in the synchronous rotating coordinate system to obtain the three-phase reference voltages $u_{ra}$, $u_{rb}$, $u_{rc}$ at the alternating-current terminal of the hybrid modular multilevel converter in the three-phase stationary coordinate system. The reference voltages $u_{ap}$, $u_{bp}$, $u_{cp}$ of the three-phase upper bridge arm and the reference voltages $u_{an}$, $u_{bn}$, $u_{cn}$ of the three-phase lower bridge arm of the hybrid modular multilevel converter are calculated based on the three-phase reference voltages $u_{ra}$, $u_{rb}$, $u_{rc}$ at the alternating-current terminal and the reference value $e_{dc\_ref}$ of the direct-current inner potential.

The obtaining the reference voltages of the three-phase upper bridge arm and the reference voltages of the three-phase lower bridge arm of the hybrid MMC based on the three-phase reference voltages and the reference value of the direct-current inner potential in step S158 includes the following steps 51581 and S1582.

In step S1581, the three-phase reference voltages are subtracted from a half of the reference value of the direct-current inner potential, respectively, to obtain the reference voltages of the three-phase upper bridge arm of the hybrid MMC.

In step S1582, the three-phase reference voltages are added to the half of the reference value of the direct-current inner potential, respectively, to obtain the reference voltages of the three-phase lower bridge arm of the hybrid MMC.

For example, the three-phase reference voltages are set to $u_{ra}$, $u_{rb}$, $u_{rc}$, and the reference value of the direct-current inner potential is set to $e_{\text{dc\_ref}}$. The reference voltages $u_{ap}$, $u_{bp}$, $u_{cp}$ of the three-phase upper bridge arm and the reference voltages $u_{an}$, $u_{bn}$, $u_{cn}$ of the three-phase lower bridge arm of the hybrid MMC are calculated according to equations

$$u_{\text{ap}} = \frac{e_{\text{dc\_ref}}}{2} - u_{\text{ra}}, \quad u_{\text{bp}} = \frac{e_{\text{dc\_ref}}}{2} - u_{\text{rb}}, \quad u_{\text{cp}} = \frac{e_{\text{dc\_ref}}}{2} - u_{\text{rc}}, \quad u_{\text{an}} = \frac{e_{\text{dc\_ref}}}{2} + u_{\text{ra}}, \quad u_{\text{bn}} = \frac{e_{\text{dc\_ref}}}{2} + u_{\text{rb}} \quad \text{, and}$$

$$u_{\text{cn}} = \frac{e_{\text{dc\_ref}}}{2} + u_{\text{rc}}.$$

In summary, in the embodiments of the present disclosure, with the introduction of the inner-loop control variables for the direct-current inner potential, the outer-loop control on the reactive power and the outer-loop control on the voltages of the sub-module capacitors, the direct-current fault in the system can be rapidly cleared, the overvoltage of the sub-module capacitors can be effectively avoided, and the dynamic reactive power support can be provided for the alternating-current power grid, improving the performance of the hybrid MMC in clearing the direct-current fault and the direct-current fault ride-through capability of the hybrid MMC, thereby reducing a loss rate of devices.

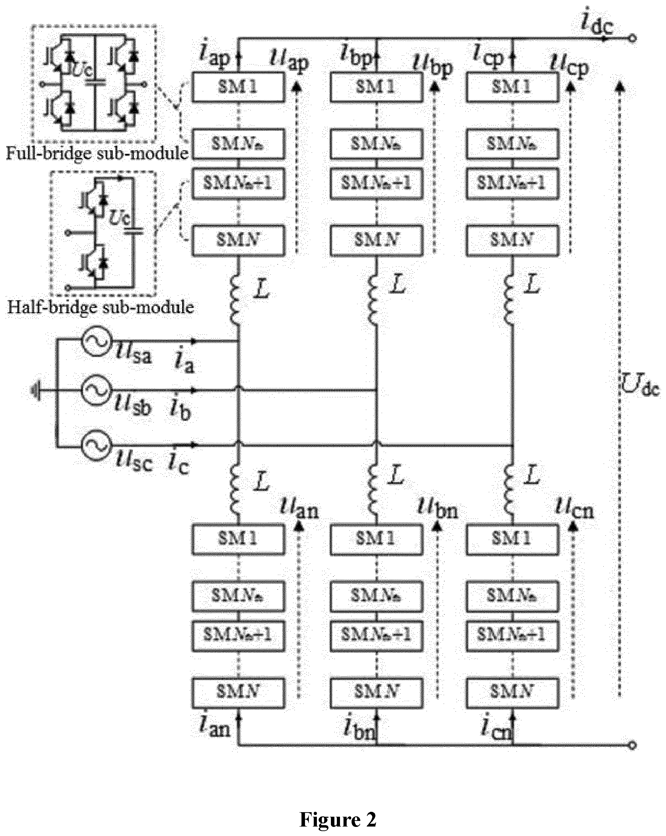

In order to better show the flow of the method for controlling a hybrid MMC, the method is described in detail below in conjunction with Figure 2 to Figure 7.

Reference is made to Figure 2, which is a schematic structural diagram of a hybrid MMC according to an embodiment of the present disclosure. Each bridge arm includes $N$ sub-modules in total. There are $N_{fb}$ full-bridge sub-modules among the $N$ sub-modules, and remaining sub-modules are half-bridge sub-modules. The full-bridge sub-module proportional coefficient of the bridge arm is defined as:

$$\eta_{\text{fb}} = \frac{N_{\text{fb}}}{N} \qquad (1)$$

The full-bridge sub-module is capable of outputting a negative level. The hybrid MMC has an adjustable direct-current bus voltage. The bridge arm of the hybrid MMC operating normally outputs a voltage in a manner the same as a manner in which a bridge arm of a conventional half-bridge MMC outputs a voltage. In this case, an upper boundary of an output level state of the bridge arm is equal to the number $N$ of sub-modules that are cascaded in the bridge arm, and a lower boundary of the output level state is equal to 0. A direct-current component of an output voltage of the bridge arm corresponds to a centerline of the upper boundary and the lower boundary, which determines the direct-current bus voltage of the hybrid MMC. A difference between the upper boundary and the lower boundary of the output voltage of the bridge arm determines a range of an alternating-current output voltage of the hybrid MMC. Since the full-bridge sub-module is capable of outputting a negative level, the lower boundary of the output level state of the bridge arm may be changed to $-N_{fb}$ at most in a case that there are $N_{fb}$ full-bridge sub-modules in the hybrid MMC. In this case, under a constraint of the range of the alternating-current output voltage of the hybrid MMC, the upper boundary and the lower boundary of the output voltage of the bridge arm may be translated downward together. A degree of the downward translation is continuously adjustable by adjusting amplitude of the outputted negative level, which indicates that a voltage at a direct-current side of the hybrid MMC is continuously adjustable. In a case that the direct-current rated voltage of the hybrid MMC is $U_{dcN}$ and the full-bridge sub-module proportional coefficient of the bridge arm is $\eta_{fb}$, a lower limit to which the direct-current voltage of the hybrid MMC is adjustable is expressed as:

$$U_{\text{neg\_lim}} = 2 \frac{N - 2N_{\text{fb}}}{2} U_{\text{c}} = (1 - 2\eta_{\text{fb}}) U_{\text{dcN}} \qquad (2)$$

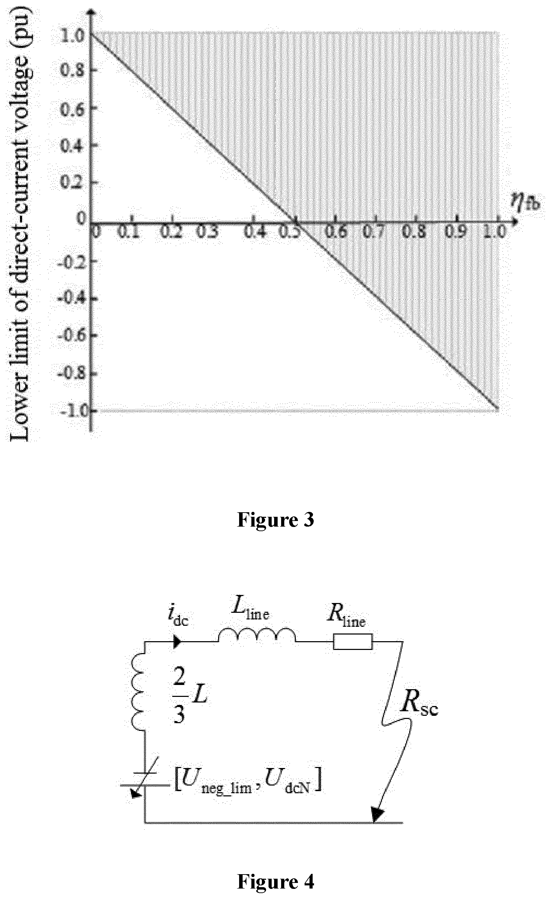

Figure 3 is a diagram showing a curve corresponding to the equation (2), which is a diagram showing a curve of a lower limit to which a direct-current voltage of a hybrid MMC is adjustable changes with a full-bridge sub-module proportional coefficient. That is, in a case that the full-bridge sub-module proportional coefficient is $\eta_{fb}$, the direct-current voltage of the hybrid MMC is continuously adjustable within a range above a corresponding point on an oblique line shown in Figure 3. For example, in a case that $\eta_{fb}$=50%, the direct-current voltage of the hybrid MMC is adjustable within a range from 0 to $U_{dcN}$. In a case that $\eta_{fb}$=75%, the direct-current voltage of the hybrid MMC is adjustable within a range from $-0.5U_{dcN}$ to $U_{dcN}$.

Figure 4 shows an equivalent circuit during a process of clearing a direct-current fault by a hybrid MMC. When it is detected that a direct-current fault occurs, the hybrid MMC operates to output a negative voltage instead of being blocked, to reduce a direct-current fault current to zero.

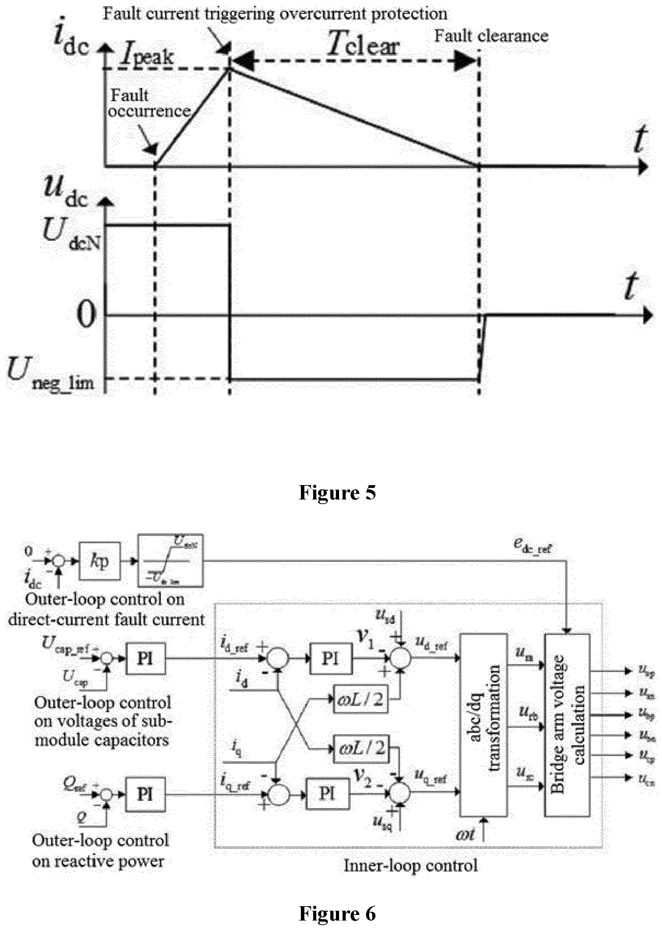

Figure 5 is a diagram showing waveforms of a direct-current voltage and a direct-current current during a process of clearing a direct-current fault by a hybrid MMC. When a direct-current fault occurs, the hybrid MMC outputs a negative voltage, so that the direct-current fault current is reduced under the action of the negative voltage. A greater direct-current negative voltage indicates faster reduction of the direct-current fault current.

During a process of actively clearing the direct-current fault, a controller for actively clearing a direct-current fault is arranged to reduce the fault current to zero and stabilize the voltages of the sub-module capacitors. Figure 6 is a schematic structural diagram of a controller for clearing a direct-current fault in a hybrid MMC according to an embodiment of the present disclosure. Once a direct-current fault is detected, the hybrid MMC is immediately controlled to actively clear the direct-current fault.

Reference is made to Figure 6, which shows outer-loop control on a direct-current fault current, an outer-loop control on voltages of sub-module capacitors, an outer-loop control on reactive power and inner-loop control. The process of clearing the direct-current fault is described in detail below.

Inner-loop control is performed on the current of the hybrid MMC in the synchronous rotating dq coordinate system. Therefore, the three-phase voltage and the three-phase current at the alternating-current terminal of the hybrid MMC are acquired first, and signals in the three-phase stationary coordinate system is transformed into signals in the synchronous rotating coordinate system, and then the signals are controlled. Firstly, the three-phase grid voltage at the alternating-current terminal of the hybrid modular multilevel converter in the three-phase stationary coordinate system is acquired, and the three-phase grid voltage in the three-phase stationary coordinate system is transformed into the d-axis grid voltage $u_{sd}$ and the q-axis grid voltage $u_{sq}$ in the synchronous rotating coordinate system through coordinate transformation. The three-phase output current at the alternating-current terminal of the hybrid modular multilevel converter in the three-phase stationary coordinate system is acquired, and the three-phase output current in the three-phase stationary coordinate system is transformed into the d-axis output current $i_d$ and the q-axis output current $i_q$ in the synchronous rotating coordinate system through coordinate transformation.

The voltages of the sub-module capacitors reflect the balance of the active power between the alternating-current side and the direct-current side of the hybrid MMC. In order to effectively avoid the overvoltage of the sub-module capacitors during the process of clearing the fault, a controller for a voltage of a direct-current capacitor is designed in the method for controlling a hybrid MMC. Closed-loop control on the voltages of the sub-module capacitors serves as outer-loop control to generate the d-axis reference current for the inner-loop control, so as to maintain of the voltages of the sub-module capacitors at a rated value, and transfer surplus energy from the direct-current line to the alternating-current power grid. In this way, the overvoltage of the full-bridge sub-module capacitors caused by blocking the hybrid MMC can be avoided, which is also the advantage of actively clearing a fault. Therefore, the reference voltage of the sub-module capacitors in the hybrid modular multilevel converter is set to $U_{cap\_ref}$, the average voltage $U_{cap}$ of the sub-module capacitors in the hybrid modular multilevel converter is acquired, and the voltage deviation signal of the sub-module capacitors is calculated from $\Delta U_{cap} = U_{cap\_ref} - U_{cap}$. Then, the voltage deviation signal $\Delta U_{cap}$ of the sub-module capacitors is inputted to the first proportional-integral controller to obtain the d-axis reference current $i_{d\_ref}$ in the synchronous rotating coordinate system.

The q-axis current in the inner-loop control may be used to control the reactive power of the hybrid modular multilevel converter, to provide a dynamic reactive power support according to the needs of the alternating-current power grid during fault clearance. The reference value of the reactive power of the hybrid modular multilevel converter is set to $Q_{ref}$, the reactive power $Q$ outputted by the hybrid MMC is acquired, and the deviation signal of the reactive power is calculated from $\Delta Q = Q_{ref} - Q$. The deviation signal $\Delta Q$ of the reactive power is inputted to the second proportional-integral controller to obtain the q-axis reference current $i_{q\_ref}$ in the synchronous rotating coordinate system.

During the process of clearing the direct-current fault, the direct-current voltage is adjusted through the closed-loop control to reduce the fault current to zero. In order to rapidly reduce the fault current to zero, a reference voltage at the direct-current terminal is generated by using a large proportional control coefficient $k_p$. The voltage at the direct-current terminal is limited to be within a range of $[U_{neg\_lim}, U_{dcN}]$ based on a proportion of the full-bridge sub-modules in each bridge arm. The direct-current rated voltage of the hybrid modular multilevel converter is set to $U_{dcN}$, the full-bridge sub-module proportional coefficient of the hybrid modular multilevel converter is set to $\eta_{fb}$, and the lower limit $U_{neg\_lim}$ of the direct-current voltage of the hybrid modular multilevel converter is calculated from $U_{neg\_lim}=(1-2\eta_{fb})U_{dcN}$.

The reference value of the direct-current output current of the hybrid modular multilevel converter is set to 0, the direct-current output current $i_{dc}$ of the hybrid modular multilevel converter is acquired, and the deviation signal of the direct-current output current is calculated from $\Delta i_{dc} = -i_{dc}$. The proportional control coefficient is set to $k_p$. The reference value $e_{dc\_ref}$ of the direct-current inner potential is calculated based on the deviation signal of the direct-current output current $\Delta i_{dc}$, the direct-current rated voltage $U_{dcN}$ and the lower limit $U_{neg\_lim}$ of the direct-current voltage. In a case that $k_p\Delta i_{dc} \geq U_{dcN}$, $e_{dc\_ref} = U_{dcN}$. In a case that $k_p\Delta i_{dc} \leq U_{neg\_lim}$, $e_{dc\_ref} = U_{neg\_lim}$. In a case that $U_{neg\_lim} < k_p\Delta i_{dc} < U_{dcN}$, $e_{dc\_ref} = k_p\Delta i_{dc}$.

After the d-axis reference current $i_{d\_ref}$, the q-axis reference current $i_{q\_ref}$ and the reference value $e_{dc\_ref}$ of the direct-current inner potential are obtained through the outer-loop control, reference voltages of six bridge arms of the hybrid modular multilevel converter are obtained through the inner-loop control.

The inner-loop control is performed on the current by decoupling a d-axis current from a q-axis current. For the control on the d-axis current, the d-axis current deviation signal $\Delta i_d$ is calculated from $\Delta i_d = i_{d\_ref} - i_d$ based on the d-axis output current $i_d$ and the d-axis reference current $i_{d\_ref}$ in the synchronous rotating coordinate system. The d-axis current deviation signal $\Delta i_d$ is inputted to the third proportional-integral controller to obtain the first intermediate control variable $v_1$. For the control on the q-axis current, the q-axis current deviation signal $\Delta i_q$ is calculated from $\Delta i_q = i_{q\_ref} - i_q$ based on the q-axis output current $i_q$ and the q-axis reference current $i_{q\_ref}$ in the synchronous rotating coordinate system. The q-axis current deviation signal $\Delta i_q$ is inputted to the fourth proportional-integral controller to obtain the second intermediate control variable $v_2$. The synchronous angular frequency of the three-phase alternating-current power grid is preset to $\omega$, and the bridge arm reactance of the hybrid modular multilevel converter is set to $L$. The d-axis reference voltage $u_{d\_ref}$

$$u_{d\_ref} = -v_1 + \frac{1}{2}\omega L i_q + u_{sd}$$

in the synchronous rotating coordinate system is calculated from based on the first intermediate control variable $v_1$ the q-axis output current $i_q$, and the d-axis grid voltage $u_{sd}$. The q-axis reference voltage $u_{q\_f}$

$$u_{q\_ref} = -v_2 - \frac{1}{2}\omega L i_d + u_{s\_q}$$

in the synchronous rotating coordinate system is calculated from based on the synchronous angular frequency $\omega$ of the three-phase alternating-current power grid, the bridge arm reactance $L$ of the hybrid modular multilevel converter, the second intermediate control variable $v_2$, the d-axis output current $i_d$ and the q-axis grid voltage $u_{sq}$.

After the d-axis reference voltage and the q-axis reference voltage in the synchronous rotating coordinate system are obtained, coordinate transformation is performed on the d-axis reference voltage $u_{d\_ref}$ and the q-axis reference voltage $u_{q\_ref}$ in the synchronous rotating coordinate system to obtain the three-phase reference voltages $u_{ra}$, $u_{rb}$, $u_{rc}$ at the alternating-current terminal of the hybrid modular multilevel converter in the three-phase stationary coordinate system.

Finally, alternating-current components of the reference voltages of the bridge arms are controlled based on the three-phase reference voltages $u_{ra}$, $u_{rb}$, $u_{rc}$ at the alternating-current terminal, to control the alternating-current terminal of the hybrid modular multilevel converter to output a corresponding alternating-current voltage, so as to achieve the control of the alternating-current output current and power. Direct-current components of the reference voltages of the bridge arms are controlled based on the reference value $e_{dc\_ref}$ of the direct-current inner potential, to control a sum of a direct-current voltage of each-phase upper bridge arm and a direct-current voltage of each-phase lower bridge arm of the hybrid modular multilevel converter, so as to control the voltage at the direct-current terminal of the hybrid modular multilevel converter, thereby achieving the fault clearance of the direct-current current. The reference voltages $u_{ap}$, $u_{bp}$, $u_{cp}$ of the three-phase upper bridge arm and the reference voltages $u_{an}$, $u_{bn}$, $u_{cn}$ of the three-phase lower bridge arm of the hybrid modular multilevel converter are calculated from

$$u_{ap} = \frac{e_{dc\_ref}}{2} - u_{ra}, \quad u_{bp} = \frac{e_{dc\_ref}}{2} - u_{rb}, \quad u_{cp} = \frac{e_{dc\_ref}}{2} - u_{rc} \qquad u_{an} = \frac{e_{dc\_ref}}{2} + u_{ra}, \quad u_{bn} = \frac{e_{dc\_ref}}{2} + u_{rb}, \quad \text{and}$$

$$u_{cn} = \frac{e_{dc\_ref}}{2} + u_{rc}$$

based on the three-phase reference voltages $u_{ra}$, $u_{rb}$, $u_{rc}$ at the alternating-current terminal and the reference value $e_{dc\_ref}$ of the direct-current inner potential. The reference voltages $u_{ap}$, $u_{bp}$, $u_{cp}$ of the three-phase upper bridge arm and the reference voltages $u_{an}$, $u_{bn}$, $u_{cn}$ of the three-phase lower bridge arm are inputted to the pulse modulation controller for the hybrid modular multilevel converter to generate the pulse control signal for the hybrid modular multilevel converter.

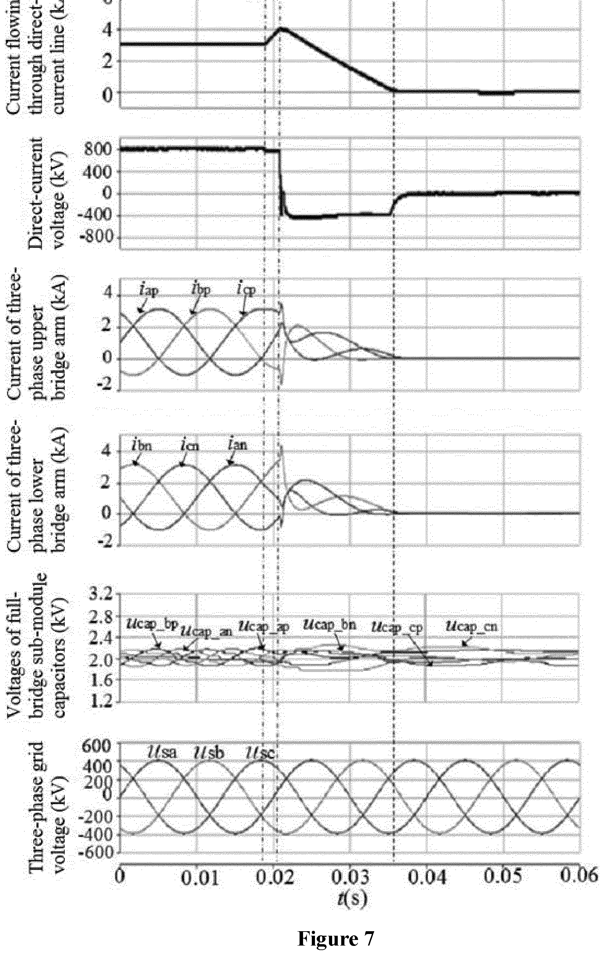

Reference is made to Figure 7, which is a diagram showing waveforms of voltages and currents during a process of clearing a direct-current fault by a hybrid MMC. In an embodiment, in a project of a bipolar MMC-HVDC with $\pm$800kV/5000MW, fault clearance with the method for controlling a hybrid MMC is simulated. Each pole of the bipolar MMC with $\pm$800kV/5000MW includes one hybrid MMC with 800kV/2500MW. The full-bridge sub-module proportional coefficient is 75%. Each pole of the hybrid MMC transmits active power 2500MW before a fault occurs. A direct-current fault occurs at a time instant t0. When current flowing through the direct-current line exceeds an overcurrent protection threshold at a time instant t1, overcurrent protection is triggered and the hybrid MMC is controlled to clear the direct-current fault. The direct-current voltage of the hybrid MMC is reduced rapidly through outer-loop control on the direct-current current, so that the direct-current fault current is rapidly adjusted to 0, so as to clear the direct-current fault. In a case that $\eta_{fb}$=0.75, a maximum direct-current negative voltage generated during the process of clearing the fault is -0.5$U_{dcN}$ (i.e., -400kV), so that the fault can be cleared rapidly. The hybrid MMC remains in operation during the process of clearing the fault, and normal operating current flows through the bridge arms. Since the hybrid MMC remains in operation, energy in the direct-current line is transmitted to the alternating-current power grid rather than be absorbed by the full-bridge sub-module capacitors. Due to the outer-loop control on the voltages of the sub-module capacitors, there is no significant overvoltage in the sub-module capacitors during the process of clearing the direct-current fault, thereby successfully achieving direct-current fault ride-through. During the process of clearing the direct-current fault, the reactive power at the alternating-current side of the hybrid MMC is also controlled. In this embodiment, the reactive power at the alternating-current side of the hybrid MMC is controlled to be 0 during the process of clearing the direct-current fault, so as to rapidly clear the fault current by the hybrid MMC and effectively avoid the overvoltage of the sub-module capacitors during the process of clearing the direct-current fault, thereby improving the performance of the hybrid MMC in clearing the direct-current fault and the direct-current fault ride-through capability of the hybrid MMC.

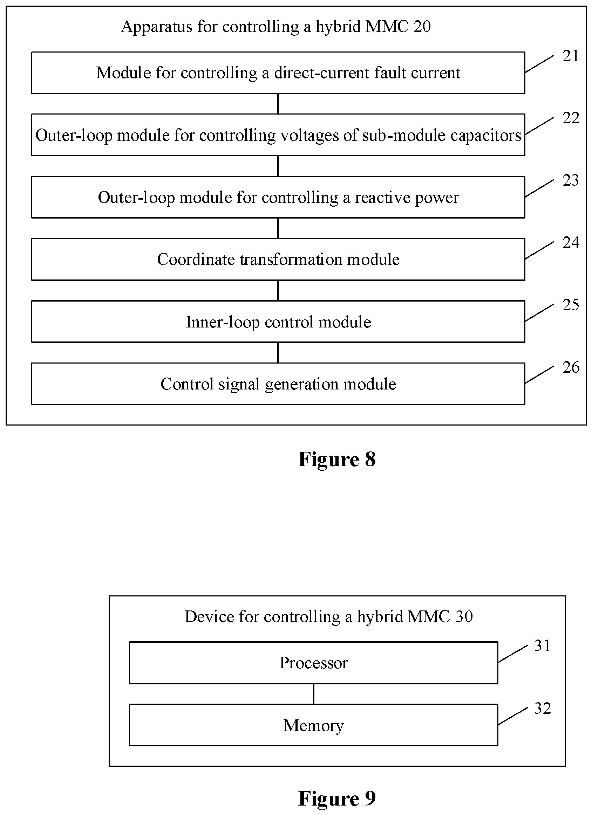

Referring to Figure 8, an apparatus for controlling a hybrid MMC is further provided according to an embodiment of the present disclosure. The apparatus 20 for controlling a hybrid MMC includes a module 21 for controlling a direct-current fault current, an outer-loop module 22 for controlling voltages of sub-module capacitors, an outer-loop module 23 for controlling a reactive power, a coordinate transformation module 24, an inner-loop control module 25, and a control signal generation module 26.

The module 21 for controlling a direct-current fault current is configured to input a direct-current output current of the hybrid MMC to a control loop for the direct-current fault current to obtain a reference value of a direct-current inner potential.

The outer-loop module 22 for controlling voltages of sub-module capacitors is configured to input an average voltage of the sub-module capacitors in the hybrid MMC to an outer control loop for the voltages of the sub-module capacitors to obtain a d-axis reference current.

The outer-loop module 23 for controlling a reactive power is configured to input a reactive power outputted by the hybrid MMC to an outer control loop for the reactive power to obtain a q-axis reference current.

The coordinate transformation module 24 is configured to obtain dq-axis grid voltages based on a three-phase grid voltage at an alternating-current terminal of the hybrid MMC, and obtain dq-axis output currents based on a three-phase output current at the alternating-current terminal of the hybrid MMC.

The inner-loop control module 25 is configured to input the reference value of the direct-current inner potential, the d-axis reference current, the q-axis reference current, the dq-axis grid voltages and the dq-axis output currents to an inner control loop to obtain reference voltages of a three-phase upper bridge arm and reference voltages of a three-phase lower bridge arm of the hybrid MMC.

The control signal generation module 26 is configured to input the reference voltages of the three-phase upper bridge arm and the reference voltages of the three-phase lower bridge arm to a pulse modulation controller for the hybrid MMC to generate a pulse control signal for the hybrid MMC.

It should be noted that the operating principle of the apparatus 20 for controlling a hybrid MMC may be referred to the method for controlling a hybrid MMC according to any one of the embodiments described above, which is not repeated herein.

Compared with the conventional technology, with the apparatus for controlling a hybrid MMC according to the embodiments of the present disclosure, the reference value of the direct-current inner potential is obtained based on the direct-current output current of the hybrid MMC through the control loop for the direct-current fault current, the d-axis reference current is obtained based on the average voltage of the sub-module capacitors in the hybrid MMC through the outer control loop for the voltages of the sub-module capacitors, the q-axis reference current is obtained based on the reactive power outputted by the hybrid MMC through the outer control loop for reactive power, the dq-axis grid voltages and the dq-axis output currents are obtained based on the three-phase grid voltage and the three-phase output current at the alternating-current terminal of the hybrid MMC through coordinate transformation, the reference voltages of the three-phase upper bridge arm and the reference voltages of the three-phase lower bridge arm of the hybrid MMC are obtained through the inner control loop, based on the reference value of the direct-current inner potential, the d-axis reference current, the q-axis reference current, the dq-axis grid voltages and the dq-axis output currents, and the reference voltages of the three-phase upper bridge arm and the reference voltages of the three-phase lower bridge arm are inputted to the pulse modulation controller for the hybrid modular multilevel converter to generate the pulse control signal for the hybrid modular multilevel converter. In the embodiments of the present disclosure, with the introduction of the inner-loop control variables for the direct-current inner potential, the outer-loop control on the reactive power and the outer-loop control on the voltages of the sub-module capacitors, the direct-current fault in the system can be rapidly cleared, the overvoltage of the sub-module capacitors can be effectively avoided, and the dynamic reactive power support can be provided for the alternating-current power grid, improving the performance of the hybrid MMC in clearing the direct-current fault and the direct-current fault ride-through capability of the hybrid MMC, thereby reducing a loss rate of devices.

Reference is made to Figure 9, which shows a device 30 for controlling a hybrid MMC according to an embodiment of the present disclosure. The device includes a processor 31, a memory 32, and a computer program that is stored in the memory 32 and configured to be executed by the processor 32. The processor 31, when executing the computer program, implements steps, for example, steps S11 to S16 in Figure 1, in the method for controlling a hybrid MMC. Alternatively, the processor 31, when executing the computer program, implements the functions of the modules, for example, the module 21 for controlling a direct-current fault current in the embodiments of the apparatus described above.

For example, the computer program may be divided into one or more modules, and the one or more modules are stored in the memory 32 and executed by the processor 31 to implement the present disclosure. The one or more modules may be a series of computer program instruction segments capable of implementing specific functions. The instruction segments are used to describe an execution process of the computer program in the device 30 for controlling a hybrid MMC. For example, the computer program may be divided into the module 21 for controlling a direct-current fault current, the outer-loop control module 22 for controlling voltages of sub-module capacitors, the outer-loop module 23 for controlling a reactive power, the coordinate transformation module 24, the inner-loop control module 25 and the control signal generation module 26. The functions of the modules are described as follows.

The module 21 for controlling a direct-current fault current is configured to input a direct-current output current of the hybrid MMC to a control loop for the direct-current fault current to obtain a reference value of a direct-current inner potential.

The outer-loop module 22 for controlling voltages of sub-module capacitors is configured to input an average voltage of the sub-module capacitors in the hybrid MMC to an outer control loop for the voltages of the sub-module capacitors to obtain a d-axis reference current.

The outer-loop module 23 for controlling a reactive power is configured to input a reactive power outputted by the hybrid MMC to an outer control loop for the reactive power to obtain a q-axis reference current.

The coordinate transformation module 24 is configured to obtain dq-axis grid voltages based on a three-phase grid voltage at an alternating-current terminal of the hybrid MMC, and obtain dq-axis output currents based on a three-phase output current at the alternating-current terminal of the hybrid MMC.

The inner-loop control module 25 is configured to input the reference value of the direct-current inner potential, the d-axis reference current, the q-axis reference current, the dq-axis grid voltages and the dq-axis output currents to an inner control loop to obtain reference voltages of a three-phase upper bridge arm and reference voltages of a three-phase lower bridge arm of the hybrid MMC.

The control signal generation module 26 is configured to input the reference voltages of the three-phase upper bridge arm and the reference voltages of the three-phase lower bridge arm to a pulse modulation controller for the hybrid MMC to generate a pulse control signal for the hybrid MMC.

Operating processes of the modules may be referred to the operating processes of the apparatus 20 for controlling a hybrid MMC described in the above embodiments, which are not repeated herein.

The device 30 for controlling a hybrid MMC may be a computing device such as a desktop computer, a laptop, a palmtop computer, and a cloud server. The device 30 for controlling a hybrid MMC may include, but is not limited to, the processor 31 and the memory 32. It can be understood by those skilled in the art that the schematic diagram shows only an example of the device for controlling a hybrid MMC and does not constitute a limitation on the device 30 for controlling a hybrid MMC. The device 30 may include more or less components than the components shown in the diagram, a combination of some components, or some components different from the components shown in the diagram. For example, the device 30 for controlling a hybrid MMC may further include an input and output device, a network access device, a bus, and the like.

The processor 31 may be a central processing unit (CPU), a general-purpose processor, a digital signal processor (DSP), an application specific integrated circuit (ASIC), a field-programmable gate array (FPGA), any other programmable logic device, a discrete gate, a transistor logic device, a discrete hardware component, or the like. The general-purpose processor may be a microprocessor, any conventional processor, or the like. The processor 31 is a control center of the device 30 for controlling a hybrid MMC, and is connected to various parts of the device 30 for controlling a hybrid MMC by using various interfaces and circuits.

The memory 32 is configured to store the computer program and/or module, and the processor 31 runs or executes the computer program and/or module stored in the memory 32 and calls the data stored in the memory 32 to implement various functions of the device 30 for controlling a hybrid MMC. The memory 32 may mainly include a program storage area and a data storage area. The program storage area may store an operating system, an application program required by at least one function (for example, a sound playback function, an image display function, and the like). The data storage area may store data (for example, audio data, a phonebook, and the like) created based on use of a mobile phone. In addition, the memory 32 may include a high-speed random access memory, and further include a non-volatile memory, such as a hard disk, an internal memory, a plug-in hard disk, a smart media card (SMC), a secure digital (SD) card, a flash card, at least one disk storage device, a flash device or other volatile solid-state storage devices.

In a case that modules integrated in the device 30 for controlling a hybrid MMC are implemented in a form of a software functional unit, and sold or used as an independent product, the modules may be stored in a computer-readable storage medium. Based on such understanding, all or some of the processes of the method according to the above embodiments of the present disclosure may be implemented by a computer program instructing relevant hardware. The computer program may be stored in a computer-readable storage medium. The computer program, when being executed by a processor, performs the method according the above embodiments. The computer program includes computer program codes. The computer program codes may be in a source code form, an object code form, an executable file form, or in some intermediate form. The computer-readable storage medium may include any entity, device or recording medium capable of storing the computer program codes, such as a U-disk, a mobile hard disk, a magnetic disk, an optical disc, a computer memory, a read-only memory (ROM), a random access memory (RAM), an electric carrier signal, a telecommunication signal and a software distribution medium.

Those skilled in the art can understand that all or some of the processes of the method in the above embodiments may be implemented by a computer program instructing relevant hardware. The program may be stored in a computer-readable storage medium. The program, when being executed, may perform the processes of the method according to the above embodiments. The storage medium may be a magnetic disk, an optical disc, a read-only memory (ROM), a random access memory (RAM), or the like.

Preferred embodiments of the present disclosure are described above. It should be noted that those skilled in the art can make several improvements and modifications without departing from the principle of the present disclosure. These improvements and modifications fall within the protection scope of the present disclosure.

**Claims**

1. A method for controlling a hybrid MMC, comprising:

   inputting a direct-current output current of the hybrid MMC to a control loop for a direct-current fault current to obtain a reference value of a direct-current inner potential;
   inputting an average voltage of sub-module capacitors in the hybrid MMC to an outer control loop for voltages of the sub-module capacitors to obtain a d-axis reference current;
   inputting a reactive power outputted by the hybrid MMC to an outer control loop for the reactive power to obtain a q-axis reference current;
   obtaining dq-axis grid voltages based on a three-phase grid voltage at an alternating-current terminal of the hybrid MMC, and obtaining dq-axis output currents based on a three-phase output current at the alternating-current terminal of the hybrid MMC;
   inputting the reference value of the direct-current inner potential, the d-axis reference current, the q-axis reference current, the dq-axis grid voltages and the dq-axis output currents to an inner control loop to obtain reference voltages of a three-phase upper bridge arm and reference voltages of a three-phase lower bridge arm of the hybrid MMC; and
   inputting the reference voltages of the three-phase upper bridge arm and the reference voltages of the three-phase lower bridge arm to a pulse modulation controller for the hybrid MMC to generate a pulse control signal for the hybrid MMC.

2. The method for controlling a hybrid MMC according to claim 1, wherein the inputting a direct-current output current of the hybrid MMC to a control loop for a direct-current fault current to obtain a reference value of a direct-current inner potential comprises:

   calculating a lower limit of a direct-current voltage of the hybrid MMC based on a preset direct-current rated voltage of the hybrid MMC and a full-bridge sub-module proportional coefficient of the hybrid MMC;
   calculating a deviation signal of the direct-current output current based on the direct-current output current of the hybrid MMC and a preset reference value of the direct-current output current of the hybrid MMC; and
   calculating the reference value of the direct-current inner potential based on a preset proportional control coefficient, the deviation signal of the direct-current output current, the direct-current rated voltage and the lower limit of the direct-current voltage.

3. The method for controlling a hybrid MMC according to claim 2, wherein the calculating the reference value of the direct-current inner potential based on a preset proportional control coefficient, the deviation signal of the direct-current output current, the direct-current rated voltage and the lower limit of the direct-current voltage comprises:

multiplying the preset proportional control coefficient by the deviation signal of the direct-current output current to obtain a signal value;
determining the direct-current rated voltage as the reference value of the direct-current inner potential in a case that the signal value is greater than or equal to the direct-current rated voltage;
determining the lower limit of the direct-current voltage as the reference value of the direct-current inner potential in a case that the signal value is less than or equal to the lower limit of the direct-current voltage; and
determining the signal value as the reference value of the direct-current inner potential in a case that the signal value is greater than the lower limit of the direct-current voltage and less than the direct-current rated voltage.

4. The method for controlling a hybrid MMC according to claim 1, wherein the inputting an average voltage of sub-module capacitors in the hybrid MMC to an outer control loop for voltages of the sub-module capacitors to obtain a d-axis reference current comprises:

calculating a voltage deviation signal of the sub-module capacitors based on the average voltage of the sub-module capacitors in the hybrid MMC and a preset reference voltage of the sub-module capacitors in the hybrid MMC; and
inputting the voltage deviation signal of the sub-module capacitors to a first proportional-integral controller to obtain the d-axis reference current.

5. The method for controlling a hybrid MMC according to claim 1, wherein the inputting a reactive power outputted by the hybrid MMC to an outer control loop for the reactive power to obtain a q-axis reference current comprises:

calculating a deviation signal of the reactive power based on the reactive power outputted by the hybrid MMC and a preset reference value of the reactive power of the hybrid MMC; and
inputting the deviation signal of the reactive power to a second proportional-integral controller to obtain the q-axis reference current.

6. The method for controlling a hybrid MMC according to claim 1, wherein the obtaining dq-axis grid voltages based on a three-phase grid voltage at an alternating-current terminal of the hybrid MMC, and obtaining dq-axis output currents based on a three-phase output current at the alternating-current terminal of the hybrid MMC comprises:

performing coordinate transformation on the three-phase grid voltage at the alternating-current terminal of the hybrid MMC in a stationary coordinate system, to obtain a d-axis grid voltage and a q-axis grid voltage in a synchronous rotating coordinate system; and
performing coordinate transformation on the three-phase output current at the alternating-current terminal of the hybrid MMC in the stationary coordinate system, to obtain a d-axis output current and a q-axis output current in the synchronous rotating coordinate system.

7. The method for controlling a hybrid MMC according to claim 1, wherein the inputting the reference value of the direct-current inner potential, the d-axis reference current, the q-axis reference current, the dq-axis grid voltages and the dq-axis output currents to an inner control loop to obtain reference voltages of a three-phase upper bridge arm and reference voltages of a three-phase lower bridge arm of the hybrid MMC comprises:

calculating a d-axis current deviation signal based on the d-axis output current and the d-axis reference current;
inputting the d-axis current deviation signal to a third proportional-integral controller to obtain a first intermediate control variable;
calculating a q-axis current deviation signal based on the q-axis output current and the q-axis reference current;
inputting the q-axis current deviation signal to a fourth proportional-integral controller to obtain a second intermediate control variable;
calculating a d-axis reference voltage based on a preset synchronous angular frequency of a three-phase alternating-current power grid, preset bridge arm reactance of the hybrid MMC, the first intermediate control variable, the q-axis output current and the d-axis grid voltage;

calculating a q-axis reference voltage based on the synchronous angular frequency, the bridge arm reactance, the second intermediate control variable, the d-axis output current and the q-axis grid voltage;

performing coordinate transformation on the d-axis reference voltage and the q-axis reference voltage to obtain three-phase reference voltages at the alternating-current terminal of the hybrid MMC in the stationary coordinate system; and

obtaining the reference voltages of the three-phase upper bridge arm and the reference voltages of the three-phase lower bridge arm of the hybrid MMC based on the three-phase reference voltages and the reference value of the direct-current inner potential, wherein the dq-axis grid voltages comprise the d-axis grid voltage and the q-axis grid voltage, and the dq-axis output currents comprise the d-axis output current and the q-axis output current.

8. The method for controlling a hybrid MMC according to claim 7, wherein the obtaining the reference voltages of the three-phase upper bridge arm and the reference voltages of the three-phase lower bridge arm of the hybrid MMC based on the three-phase reference voltages and the reference value of the direct-current inner potential comprises:

subtracting the three-phase reference voltages from a half of the reference value of the direct-current inner potential, respectively, to obtain the reference voltages of the three-phase upper bridge arm of the hybrid MMC; and

adding the three-phase reference voltages to the half of the reference value of the direct-current inner potential, respectively, to obtain the reference voltages of the three-phase lower bridge arm of the hybrid MMC.

9. An apparatus for controlling a hybrid MMC, comprising:

a module for controlling a direct-current fault current, configured to input a direct-current output current of the hybrid MMC to a control loop for a direct-current fault current to obtain a reference value of the direct-current inner potential;

an outer-loop module for controlling voltages of sub-module capacitors, configured to input an average voltage of sub-module capacitors in the hybrid MMC to an outer control loop for the voltages of the sub-module capacitors to obtain a d-axis reference current;

an outer-loop module for controlling a reactive power, configured to input a reactive power outputted by the hybrid MMC to an outer control loop for the reactive power to obtain a q-axis reference current;

a coordinate transformation module, configured to obtain dq-axis grid voltages based on a three-phase grid voltage at an alternating-current terminal of the hybrid MMC, and obtain dq-axis output currents based on a three-phase output current at the alternating-current terminal of the hybrid MMC;

an inner-loop control module, configured to input the reference value of the direct-current inner potential, the d-axis reference current, the q-axis reference current, the dq-axis grid voltages and the dq-axis output currents to an inner control loop to obtain reference voltages of a three-phase upper bridge arm and reference voltages of a three-phase lower bridge arm of the hybrid MMC; and

a control signal generation module configured to input the reference voltages of the three-phase upper bridge arm and the reference voltages of the three-phase lower bridge arm to a pulse modulation controller for the hybrid MMC to generate a pulse control signal of the hybrid MMC.

10. A storage medium storing a computer program, wherein the computer program, when running, controls a device where the storage medium is located to perform the method for controlling a hybrid MMC according to any one of claims 1 to 8.

| Input a direct-current output current of the hybrid MMC to a control loop for a direct-current fault current to obtain a reference value of the direct-current inner potential | S11 |

| Input an average voltage of sub-module capacitors in the hybrid MMC to an outer control loop for voltages of the sub-module capacitors to obtain a d-axis reference current | S12 |

| Input a reactive power outputted by the hybrid MMC to an outer control loop for the reactive power to obtain a q-axis reference current | S13 |

| Obtain dq-axis grid voltages based on a three-phase grid voltage at an alternating-current terminal of the hybrid MMC, and obtain dq-axis output currents based on a three-phase output current at the alternating-current terminal of the hybrid MMC | S14 |

| Input the reference value of the direct-current inner potential, the d-axis reference current, the q-axis reference current, the dq-axis grid voltages and the dq-axis output currents to an inner control loop to obtain reference voltages of a three-phase upper bridge arm and reference voltages of a three-phase lower bridge arm of the hybrid MMC | S15 |

| Input the reference voltages of the three-phase upper bridge arm and the reference voltages of the three-phase lower bridge arm to a pulse modulation controller for the hybrid MMC to generate a pulse control signal for the hybrid MMC | S16 |

**Figure 1**

**Figure 2**

**Figure 3**

**Figure 4**

**Figure 5**

**Figure 6**

**Figure 7**

Apparatus for controlling a hybrid MMC 20

Module for controlling a direct-current fault current ╱ 21

Outer-loop module for controlling voltages of sub-module capacitors ╱ 22

Outer-loop module for controlling a reactive power ╱ 23

Coordinate transformation module ╱ 24

Inner-loop control module ╱ 25

Control signal generation module ╱ 26

**Figure 8**

Device for controlling a hybrid MMC 30

Processor ╱ 31

Memory ╱ 32

**Figure 9**

## INTERNATIONAL SEARCH REPORT

| International application No. |
| --- |
| **PCT/CN2021/131696** |

**A. CLASSIFICATION OF SUBJECT MATTER**

H02J 3/00(2006.01)i; H02M 7/5387(2007.01)i

According to International Patent Classification (IPC) or to both national classification and IPC

**B. FIELDS SEARCHED**

Minimum documentation searched (classification system followed by classification symbols)

H02J; H02M

Documentation searched other than minimum documentation to the extent that such documents are included in the fields searched

Electronic data base consulted during the international search (name of data base and, where practicable, search terms used)

CNPAT, CNKI, EPODOC, WPI: 混合, 模块化多电平换流器, 直流故障, 负电平, 负压, 无功, 子模块电容电压, 直流电流, 直流电压, hybrid, mix, MMC, DC fault, negative, reactive power, capacitor voltage, DC voltage

**C. DOCUMENTS CONSIDERED TO BE RELEVANT**

| Category* | Citation of document, with indication, where appropriate, of the relevant passages | Relevant to claim No. |
| --- | --- | --- |
| X | CN 107994613 A (HUAZHONG UNIVERSITY OF SCIENCE AND TECHNOLOGY et al.) 04 May 2018 (2018-05-04) description, paragraphs [0052]-[0069], and figures 1-4 | 1, 4-10 |
| Y | CN 107994613 A (HUAZHONG UNIVERSITY OF SCIENCE AND TECHNOLOGY et al.) 04 May 2018 (2018-05-04) description, paragraphs [0052]-[0069], and figures 1-4 | 2-3 |
| Y | CN 109245582 A (ELECTRIC POWER RESEARCH INSTITUTE, CHINA SOUTHERN POWER GRID et al.) 18 January 2019 (2019-01-18) description, paragraphs [0030]-[0059], and figure 4 | 2-3 |
| PX | CN 113394772 A (CHINA SOUTH POWER GRID ELECTRIC POWER RESEARCH INSTITUTE CO., LTD.) 14 September 2021 (2021-09-14) claims 1-10 | 1-10 |
| A | CN 104917415 A (STATE GRID CORPORATION OF CHINA et al.) 16 September 2015 (2015-09-16) entire document | 1-10 |
| A | CN 104362616 A (XUJI ELECTRIC CO., LTD.) 18 February 2015 (2015-02-18) entire document | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 March 2022** | **15 March 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/131696**

C.    DOCUMENTS CONSIDERED TO BE RELEVANT

| Category* | Citation of document, with indication, where appropriate, of the relevant passages | Relevant to claim No. |
|---|---|---|
| A | CN 109842142 A (STATE GRID HE'NAN ELECTRIC POWER RESEARCH INSTITUTE et al.) 04 June 2019 (2019-06-04)<br>    entire document | 1-10 |
| A | US 2015229234 A1 (KOREA ELECTROTECHNOLOGY RESEARCH INSTITUTE) 13 August 2015 (2015-08-13)<br>    entire document | 1-10 |

Form PCT/ISA/210 (second sheet) (January 2015)

**INTERNATIONAL SEARCH REPORT**
Information on patent family members

International application No.

**PCT/CN2021/131696**

| Patent document cited in search report | | | Publication date (day/month/year) | Patent family member(s) | | | Publication date (day/month/year) |
|---|---|---|---|---|---|---|---|
| CN | 107994613 | A | 04 May 2018 | None | | | |
| CN | 109245582 | A | 18 January 2019 | None | | | |
| CN | 113394772 | A | 14 September 2021 | None | | | |
| CN | 104917415 | A | 16 September 2015 | WO | 2015135352 | A1 | 17 September 2015 |
| CN | 104362616 | A | 18 February 2015 | None | | | |
| CN | 109842142 | A | 04 June 2019 | None | | | |
| US | 2015229234 | A1 | 13 August 2015 | CN | 104836422 | A | 12 August 2015 |
| | | | | KR | 101512188 | B1 | 22 April 2015 |
| | | | | US | 9350270 | B2 | 24 May 2016 |
| | | | | DE | 102014109478 | A1 | 13 August 2015 |

Form PCT/ISA/210 (patent family annex) (January 2015)